# FASCICULE DE BREVET EUROPEEN

(11) **EP 2 406 133 B1**
(45) Date de publication et mention de la délivrance du brevet: **16.01.2013**
(21) Numéro de dépôt: 10716387.5
(22) Date de dépôt: 12.03.2010
(51) Int. Cl.: B64D 27/20

(54) **AVION À EMPENNAGE QUEUE-DE-MORUE ET MOTEUR ARRIÈRE**
FLUGZEUG MIT FRACK-SCHWANZANORDNUNG UND HECKMOTOR
AIRPLANE WITH A TAILCOAT TAIL ASSEMBLY AND REAR ENGINE

(30) Priorité: 12.03.2009 FR 0951561
(43) Date de publication de la demande: 18.01.2012
(73) Titulaire: Airbus Operations (S.A.S.), 31060 Toulouse (FR)
(72) Inventeur: CAZALS, Olivier, F-31700 Daux (FR); GENTY DE LA SAGNE, Jaime, F-31400 Toulouse (FR)
(74) Mandataire: Maupilier, Didier
(86) Numéro de dépôt international: PCT/FR2010/050437
(87) Numéro de publication internationale: WO 2010/103252

(56) Documents cités:
- EP-A- 1 616 786
- FR-A- 1 047 027
- FR-A- 2 919 267
- FR-A- 2 919 268
- GB-A- 1 397 068
- GB-A- 1 463 810
- GB-A- 2 120 623
- US-A- 3 117 748

## Description

La présente invention appartient au domaine des avions et plus particulièrement des avions comportant un fuselage auquel sont fixés un ensemble d'empennages et un moteur dans la partie arrière du fuselage.

Il est connu dans le domaine des avions, en particulier des avions de transport commerciaux, d'agencer un moteur de propulsion sur le fuselage et sensiblement dans l'axe du fuselage afin d'augmenter le nombre de moteurs de propulsion sans nécessiter d'augmenter ce nombre par deux pour respecter une symétrie générale de l'avion par rapport au plan vertical axial de l'avion.

Cette solution est en général utilisée pour augmenter de nombre de moteurs de deux à trois, le moteur dans le plan de symétrie de l'avion étant associé à des moteurs sous les ailes comme par exemple dans les avions Lockeed 1011 ou Mac Donnell Douglas DC10 ou à des moteurs arrières fixés symétriquement sur les côtés du fuselage comme par exemple sur l'avion Boeing 727. Une autre exemple est donné dans le document FR2 919267.

L'installation d'un moteur dans ou sur un fuselage arrière est cependant une source de difficultés diverses, essentiellement liées à l'augmentation de complexité de l'agencement des structures qu'implique l'installation du moteur arrière dans une zone du fuselage déjà complexe en raison de la présence des empennages arrières et de la diminution progressive des sections de fuselage.

Les modèles d'avions cités comportent principalement un fuselage plus ou moins allongé auquel est fixé une aile dans une position médiane suivant la longueur du fuselage et auquel est fixé dans une partie arrière un ensemble d'empennages, un empennage horizontal et un empennage vertical, comportant diverses surfaces aérodynamiques pour assurer la stabilité aérodynamique de l'avion et sa manoeuvrabilité au moyen de gouvernes associées aux empennages.

Pour éviter une traînée aérodynamique de culot du fuselage trop importante, la partie arrière du fuselage est effilée et sa section diminue progressivement en hauteur et en largeur depuis une section courante de fuselage, correspondant à la partie arrière d'une partie de fuselage sensiblement cylindrique, vers une section de fin de fuselage beaucoup plus petite.

Cette partie arrière du fuselage est souvent désignée cône arrière en raison de sa forme d'ensemble voisine d'un tronc de cône.

L'empennage horizontal et l'empennage vertical sont formés de surfaces aérodynamiques spécialisées qui sont fixées sur les côtés pour l'empennage horizontal et sur le dessus pour l'empennage vertical du cône arrière de fuselage.

L'axe du cône arrière est orienté vers le haut par rapport à l'axe de la partie cylindrique du fuselage pour augmenter l'angle de rotation possible au sol de l'avion lors des phase de décollage et d'atterrissage.

La diminution des sections du fuselage associée à la présence des empennages réduit donc la place disponible pour installer le moteur et diminue la rigidité intrinsèque du fuselage devant assurer le cheminement des efforts de poussée du moteur et des efforts d'inertie, importants en raison de la masse du moteur, et le volume et les rigidités nécessaires ne sont retrouvés qu'au prix de complexités de structures et de renforcements qui se traduisent par des augmentations de masse.

Cette proximité du moteur et des empennages introduits des complexités supplémentaires de par les précautions qui doivent être également prises pour éviter que d'éventuels débris pouvant être projetés par le moteur ne viennent endommager les empennages de manière inacceptable.

La prise en compte de toutes ces contraintes d'agencement de la partie arrière du fuselage conduisent à une installation du moteur peu performante sur le plan de l'aérodynamique et du rendement de propulsion, un moteur arrière sur ou dans le fuselage présentant dans les architectures connues un rendement propulsif inférieur à celui d'un moteur équivalent installé sous une aile de l'ordre de 20%.

Du fait de la combinaison de toutes les contraintes exposées, un avion avec un fuselage conventionnel dans sa partie consacrée à la charge utile se trouve pénalisé lorsque la solution d'un moteur arrière dans le plan de symétrie vertical de l'avion est envisagée :
- pénalisé en complexité d'installation ;
- pénalisé en aérodynamique ;
- pénalisé en masse de structure.

Afin de réduire les pénalités aérodynamiques et en masses des solutions de l'art antérieur, l'invention propose un nouvel agencement d'une partie arrière de fuselage incorporant un ensemble propulsif dont l'installation est simplifiée.

L'avion suivant l'invention comporte de manière connue un fuselage, par exemple un fuselage de forme allongée suivant un axe longitudinal X de l'avion orienté positivement vers l'avant de l'avion, au moins une aile fixée au fuselage entre l'extrémité avant et l'extrémité arrière du fuselage comportant lui-même une partie centrale sensiblement cylindrique et une partie évolutive arrière, se raccordant à la partie centrale au niveau d'une section de raccordement, sur laquelle est fixé un empennage vertical et un ensemble propulsif.

Sur l'avion de l'invention la partie arrière du fuselage est de forme aplatie et le ou les réacteurs de l'ensemble propulsif sont fixés au-dessus du fuselage dans la partie arrière de forme aplatie et partiellement à l'intérieur du fuselage suivant une configuration semi-enterrée.

La forme aplatie, dite en queue-de-morue, est telle que, au niveau de la partie évolutive arrière du fuselage, :
- la hauteur maximale de chaque section du fuselage est décroissante vers l'arrière en direction des X négatifs, de telle sorte que l'extrémité arrière du fuselage forme un bord de fuite, en pratique un bord de fuite de relativement faible épaisseur et avantageusement sensiblement horizontal dans un repère avion et sensiblement rectiligne, de largeur L strictement supérieure à la largeur maximale de la section de raccordement ;
- la largeur maximale de chaque section du fuselage augmente continûment, c'est à dire qu'elle est monotone croissante, vers l'arrière en direction des X négatifs depuis la largeur maximale de la section de raccordement jusqu'à la largeur maximale L supérieur à la largeur maximale de la section de raccordement ;
- le ou les réacteurs arrières du système propulsif arrière sont situés de préférence, suivant la direction longitudinale, dans une zone de la partie arrière du fuselage de largeur sensiblement maximale ;
- l'axe longitudinal du ou des réacteurs arrières, sensiblement parallèle à l'axe longitudinal X, est dans une forme de réalisation préférée situé, au niveau de l'entrée d'air du réacteur arrière, au-dessus de la partie centrale du fuselage ;
- la partie inférieure du ou des réacteurs arrières, au niveau d'un diamètre maximum du réacteur arrière, est partiellement à l'intérieur du fuselage et une partie supérieure du réacteur est au-dessus du fuselage suivant la configuration semi-enterrée.

En outre la nacelle du ou des réacteurs arrières, de largeur inférieure à la largeur du fuselage dans la zone de la nacelle, se raccorde latéralement au fuselage de chaque côté de la nacelle de sorte que la fuselage présente une zone applatie s'étendant de chaque côté de la nacelle.

Dans un agencement préféré le réacteur arrière est agencé suivant la direction longitudinale de l'avion de manière qu'une extrémité avant du réacteur arrière est situé en arrière d'un fond arrière étanche d'une cabine du fuselage.

Pour assurer le contrôle en tangage de l'avion, la partie arrière du fuselage comporte de chaque coté de l'ensemble propulsif arrière une gouverne de fuselage articulée sur le fuselage autour d'un axe sensiblement horizontal dans un repère avion et dont le bord de fuite correspond à l'extrémité du fuselage.

Pour assurer la stabilité et le contrôle en lacet, l'empennage vertical comporte deux dérives sensiblement verticales fixées à la partie arrière du fuselage avantageusement en avant des gouvernes de fuselage pour éviter des interférences mécaniques entre les gouvernes de fuselage et les dérives et leurs gouvernes de direction, chaque dérive étant solidarisée au fuselage sur un bord, respectivement droit et gauche de l'avion, de la partie arrière du fuselage, par exemple dans une zone correspondant sensiblement à la zone de largeur maximale L afin de limiter des risques d'interférences avec l'installation de l'ensemble propulsif.

En outre pour limiter les risques d'endommagement de la structure des dérives en cas d'éclatement de parties tournantes d'un réacteur arrière, les longerons des dérives sont agencés suivant la direction longitudinale X sur la partie arrière du fuselage par rapport aux réacteurs arrières de sorte que les longerons se trouvent en dehors des zones de projection de débris des réacteurs.

Pour limiter le rayonnement sonore du réacteur vers le bas, en particulier lorsque l'avion est proche du sol, une structure mobile de la partie arrière du fuselage comporte au moins une position rentrée dans laquelle ladite structure mobile est située à l'intérieur de la partie arrière du fuselage pour ne pas pénaliser l'aérodynamique de l'avion en condition de vol en croisière et comporte au moins une position sortie dans laquelle la structure mobile forme une extension vers l'arrière du bord de fuite du fuselage à son extrémité arrière, sensiblement dans un plan horizontal d'un repère avion et sous l'ensemble propulsif arrière.

La structure mobile est avantageusement d'extension suivant une envergure correspondant sensiblement à une distance séparant les gouvernes de fuselage.

Dans la position sortie la structure mobile crée un écran réflecteur sonore qui évite la propagation des bruits émis par la tuyère du ou des réacteurs vers le bas donc vers le sol lors des phases de vol à base altitude en particulier.

Pour la conception structurale d'un tel agencement de partie arrière de fuselage, le fuselage comporte en arrière d'un fond arrière de cabine tel qu'un fond étanche d'une cabine pressurisée, des cadres forts pour reprendre les différents efforts introduits dans fuselage.

Les dits cadres forts comportent des cadres de dérives agencés pour reprendre les efforts introduits dans le fuselage par les longerons de dérives.

Les dits cadres forts comportent des cadres moteurs qui sont pourvus chacun dans leur partie supérieure d'un arceau présentant une ouverture ayant sensiblement les dimensions de l'entrée d'air du ou des réacteurs arrières pour éviter des interférences entre la structure des arceaux et l'entrée d'air du ou des réacteurs.

Les cadres moteurs sont de préférence agencés en avant du réacteur arrière et sont de résistance structurale suffisante pour reprendre les efforts introduits dans la structure du fuselage par le réacteur arrière.

Pour des raisons de sécurité, tout ou partie des cadres forts est de préférence réalisée en deux parties juxtaposées suivant une conception dite « fail-safe ».

Afin de conserver des principes d'accrochage connu pour le ou les réacteurs arrières, celui-ci ou ceux-ci sont accrochés suspendus sous une poutre structurale en porte à faux en arrière des cadres moteurs, poutre structurale solidaire des arceaux et de préférence, pour des raison de sécurité, réalisée en deux parties juxtaposées suivant une conception dite « fail-safe ».

La partie arrière du fuselage comporte également de préférence deux nervures longitudinales, sensiblement dans un plan vertical dans un repère avion, solidaires d'au moins un cadre fort et s'étendant vers l'arrière, en porte à faux d'un cadre fort arrière, sensiblement jusqu'à l'extrémité arrière du fuselage.

Ces nervures délimitent entre elles sous le ou les réacteurs arrières un puits de maintenance dégagé de tout obstacle par lequel un réacteur arrière peut être déposé par gravité pour rendre aisé la dépose ou le montage du réacteur lors d'une opération de maintenance.

Afin de refermer le puits de maintenance en dehors des opérations de maintenance, le puits comporte des trappes mobiles assurant en position fermée la continuité aérodynamique de la partie inférieure de la partie arrière du fuselage.

La structure mobile comporte avantageusement pour répondre aux différents types d'opération de maintenance une première position rentrée dans laquelle elle est située sous l'ensemble propulsif dans la zone du puits de maintenance et une seconde position rentrée, dans laquelle la structure mobile est avancée par rapport à la première position rentrée, dans laquelle elle est située en avant de l'ensemble propulsif et libère le puits de maintenance.

Un dernier cadre ou cadre arrière comporte deux portions externes solidaires des nervures longitudinales du côté opposé au puits de maintenance.

Les gouvernes de fuselage sont articulées sur ce cadre arrière, plus précisément chaque gouverne est articulée sur la portion externe du cadre arrière du côté ou est situé la gouverne considérée.

Pour assurer une aérodynamique performante de l'ensemble propulsif arrière, le ou les réacteurs arrières comporte une nacelle qui assure les formes aérodynamiques internes et externes de l'ensemble propulsif.

De préférence pour des raisons d'accès aux réacteurs lors d'opérations de maintenance, au moins entre une structure entrée d'air à l'avant et une structure de tuyère à l'arrière, des sous-ensembles formant des capots mobiles sont articulés au niveau de la poutre structurale.

Dans un mode de réalisation de l'invention, l'avion comporte un réacteur d'un premier modèle de chaque côté de l'avion fixé sous l'aile et comporte un réacteur arrière de l'ensemble propulsif arrière d'un second modèle ayant une poussée de référence sensiblement supérieure à celle du premier modèle afin de diminuer la poussée nécessaire des réacteurs du premier modèle et de réduire le niveau de bruit émis par les réacteurs sous l'aile et de diminuer la hauteur du fuselage au-dessus du sol lorsque l'avion est au sol pour une garde au sol donnée des moteurs du fait d'un plus petit diamètre des moteurs sous l'aile.

La description détaillée d'exemples de réalisation de l'invention est faite en référence aux figures qui représentent schématiquement :
Figure 1 : une vue d'ensemble en perspective d'un exemple d'avion suivant l'invention ;
Figures 2a à 2c : des vues de profil (figure 2a), de dessus (figure 2b), de face (figure 2c) de l'avion de la figure 1 ;
Figures 3a à 3d : des vues de côté (figure 3a), depuis l'arrière (figure 3b), de dessus (figure 3c) et de dessous (figure 3d) de l'extrémité arrière du fuselage de l'avion des figures 1 et 2 ;
Figures 4a et 4b : des vues en perspective respectivement depuis l'avant et depuis l'arrière de l'extrémité arrière du fuselage de l'avion des figures 1 et 2 ;
Figures 5a et 5b : des vues écorchées de la partie arrière de l'avion de la figure 1 ;
Figures 6a et 6b : des vues en perspective de la partie arrière du fuselage avec les capots de nacelle arrière ouverts ;
Figure 7a : une vue en perspective écorchée de la partie arrière avec la structure mobile arrière en position rentrée ;
Figure 7b : une vue de dessus de la partie arrière avec la structure arrière en position sortie et montant les directions du rayonnement des bruits du réacteur arrière.

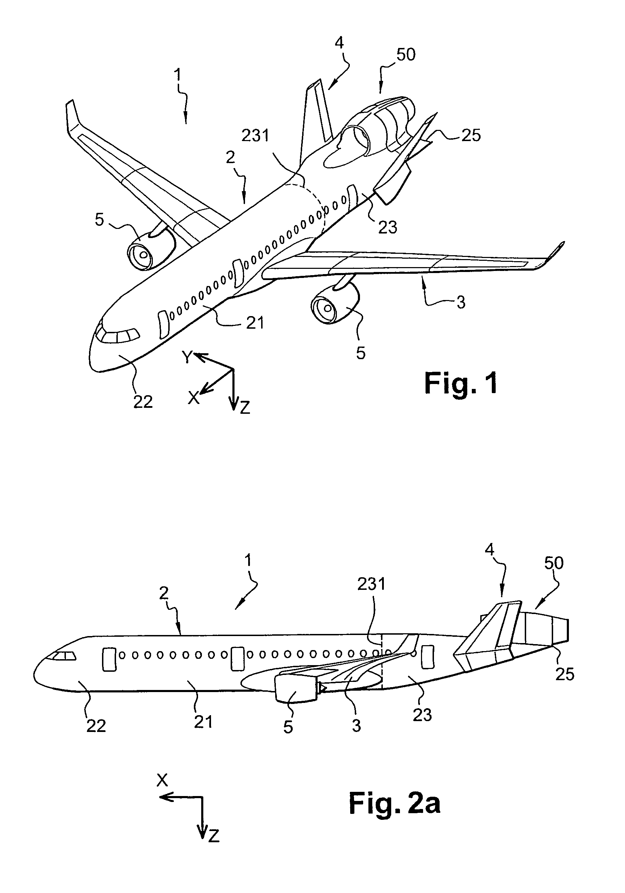

Comme illustré à titre d'exemple non limitatif sur la figure 1 en perspective et sur les figures 2a à 2c suivant différentes vues en projection, un avion 1 suivant l'invention comporte un fuselage allongé 2, une aile 3 fixée au fuselage et un empennage vertical 4 fixé au fuselage sur une partie du fuselage 2 situé sensiblement en arrière de l'aile 3.

Conformément aux conventions utilisées dans le domaine de la conception des avions, l'avion 1 est, pour les besoins de la description, associé à un repère avion défini par :
- un axe X correspondant à un axe longitudinal de l'avion 1 et du fuselage 2, orienté positivement vers l'avant de l'avion dans le sens du vol ;
- un axe Z correspondant à un axe vertical de l'avion 1, c'est à dire un axe perpendiculaire à l'axe X dans un plan de symétrie vertical XZ de l'avion, et orienté positivement vers le bas de l'avion ;
- un axe Y perpendiculaire au plan de symétrie vertical avion XZ et formant avec les axes X et Z un trièdre direct, c'est à dire que Y est orienté positivement vers la droite de l'avion 1.

Pour les besoins de la description les termes avant, arrière, haut, bas, au-dessus, au-dessous, droite et gauche auront le sens commun tel que par exemple un pilote de l'avion les considère.

Notamment :
- en avant ou vers l'avant signifie du côté des X positifs et en arrière ou vers l'arrière signifie du côté des X négatifs ;
- vers le haut ou au-dessus signifie du côté des Z négatifs et vers le bas ou en dessous signifie du côté des Z positifs ;
- à droite ou vers la droite signifie du côté des Y positifs et à gauche ou vers la gauche signifie du côté des Y négatifs.

Le fuselage 2 allongé comporte une partie centrale sensiblement cylindrique 21, par exemple de section circulaire ou de section multilobée ou encore de section elliptique, ainsi qu'à l'avant de ladite partie centrale une partie évolutive avant 22 dans laquelle se trouve en général un poste de pilotage et à l'arrière une partie évolutive arrière 23 sur laquelle est fixé l'empennage vertical 4.

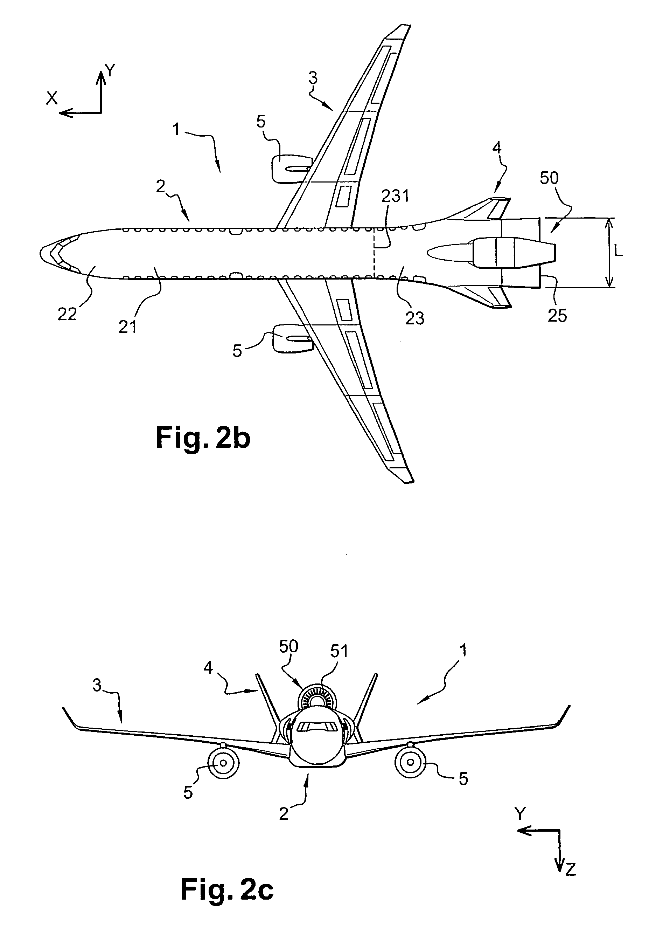

L'aile 3 est fixée au fuselage 2 dans une partie basse du fuselage, comme sur les illustrations des figures 1 et 2, ou bien est fixé dans une partie haute du fuselage ou encore dans une position en hauteur intermédiaire, solutions non illustrées.

De manière connue des réacteurs de propulsion 5 sont fixés à l'aile.

La géométrie de la partie évolutive arrière 23 du fuselage 2 correspond à une forme s'aplatissant progressivement vers l'arrière.

Ainsi considérant en tout point suivant la direction longitudinale X du fuselage une largeur maximale suivant la direction Y et une hauteur maximale suivant la direction Z d'une section dans un plan ZY dudit fuselage audit point, les hauteurs maximales des sections diminuent continûment depuis une section avant 231, dite section de raccordement, qui représente la limite arrière géométrique de la partie centrale 21, jusqu'à une extrémité arrière 25 du fuselage au niveau de laquelle la hauteur est sensiblement nulle, en pratique l'épaisseur d'un bord de fuite de gouverne aérodynamique comme il sera compris par la suite de l'exposé.

En outre l'évolution de la hauteur des sections est telle que la partie inférieure de la partie évolutive arrière 23 du fuselage remonte plus rapidement que ne descend la partie supérieure de ladite partie évolutive arrière comme cela est visible sur la figure 2a conduisant à une partie supérieure relativement, comparativement à la forme inférieure, dans le prolongement de la partie supérieure de la partie centrale 21 du fuselage.

En outre, a contrario de la hauteur, les largeurs des sections de la partie évolutive arrière 23 du fuselage augmentent continûment depuis la section avant 231 de raccordement jusqu'à l'extrémité arrière 25 comme illustré sur la figure 2b à laquelle extrémité la largeur du fuselage est strictement supérieure à la largeur maximale de ladite section de raccordement.

L'expression augmente continûment est ici à considérer dans un sens général, c'est à dire que ladite largeur maximale locale augmente ou bien reste constante de sorte que la largeur maximale dans cette partie arrière suit une loi de variation monotone croissante. En particulier la forme de la partie arrière est telle que la largeur maximale du fuselage dans cette partie peut être maintenue constante sur une distance suivant X plus ou moins importante.

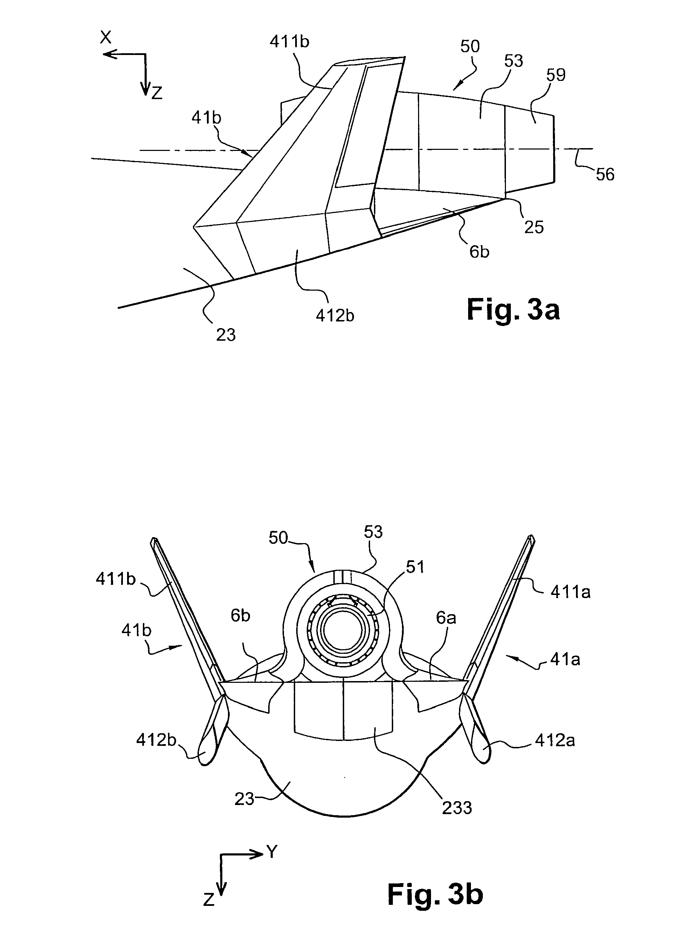

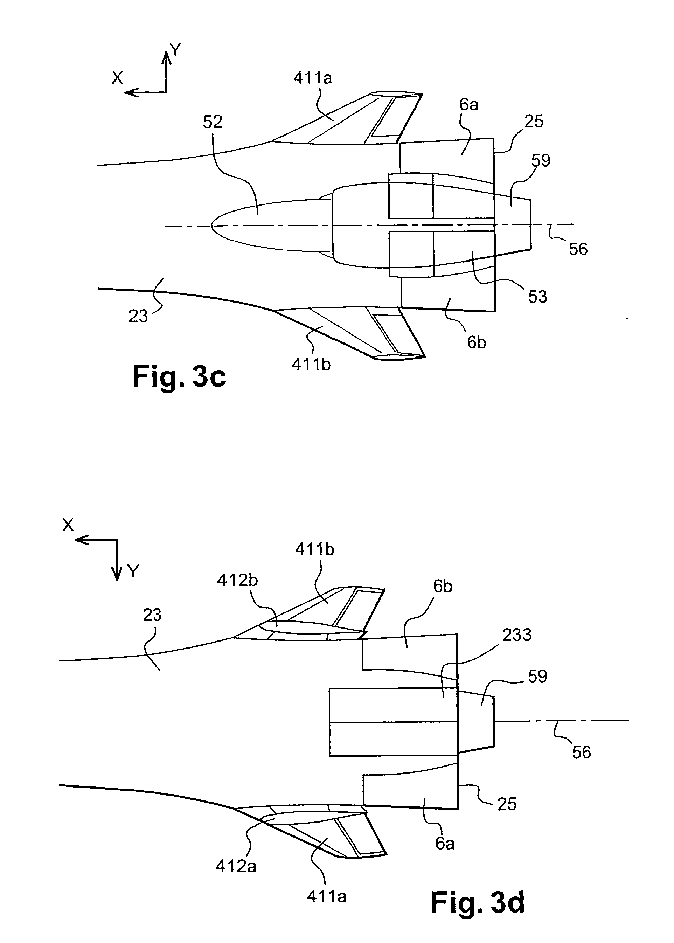

Dans l'exemple illustré, comme il est mis en évidence sur les figures 2b, 3c et 3d, la largeur maximale de la partie arrière 23 est sensiblement constante d'une part dans une zone avant de ladite partie arrière en arrière de la section avant 231 de raccordement et d'autre part dans une zone arrière de la dite partie arrière du côté de l'extrémité 25 de largeur supérieure.

Prés de l'extrémité arrière 25 du fuselage 2, c'est à dire dans la zone se terminant avec une hauteur sensiblement nulle, le fuselage présente donc une largeur L supérieure à la largeur maximale du fuselage 2 de l'avion 1 dans la partie centrale, lui donnant une forme dite en queue-de-morue.

Ladite forme en queue de morue se caractérise en particulier par une zone supérieure relativement plane dont des caractéristiques détaillées seront exposées plus loin dans la description.

En outre un ensemble propulsif arrière 50 est agencé au-dessus du fuselage dans la partie évolutive arrière 23 correspondant à la zone supérieure relativement plane.

L'ensemble propulsif arrière 50 comporte un réacteur arrière 51 d'axe longitudinal 56 sensiblement dans le plan de symétrie vertical XZ du fuselage 2.

Le réacteur arrière 51 est placé en hauteur au-dessus du fuselage de sorte que, au niveau d'un diamètre maximum du réacteur, en pratique le diamètre d'un carter de soufflante d'entrée d'air d'un réacteur double flux, un centre de l'entrée d'air du réacteur se trouve au-dessus de la partie supérieure de la partie centrale 21 du fuselage et de préférence de sorte qu'une partie inférieure du réacteur se trouve à l'intérieur de la partie arrière 23 du fuselage suivant une configuration dite partiellement enterrée.

Dans une telle configuration partiellement enterré dans le fuselage, une partie inférieure du réacteur 51 se trouve donc située en dessous de la surface supérieure de la partie arrière du fuselage.

Afin d'assurer un écoulement aérodynamique correct au niveau d'une entrée d'air du réacteur 51, la surface supérieure de la partie arrière 23 du fuselage comporte une partie enfoncée 52, formant une surface prolongeant l'entrée d'air, dite canal amont d'entrée d'air, située dans la continuité de la partie inférieure de l'entrée d'air qui est enterrée dans le fuselage. Un tel canal amont d'entrée d'air correspond sensiblement à l'intersection d'une surface cylindrique avec le volume de la partie arrière du fuselage 23.

Dans l'exemple illustré sur les différentes figures, le réacteur 51 est agencé sur la partie arrière 23 du fuselage de telle façon qu'une extrémité arrière dudit réacteur soit situé en arrière de l'extrémité arrière 25 du fuselage, par exemple avec un dépassement du réacteur 51 en arrière de l'extrémité arrière 25 du fuselage correspondant à tout ou partie d'une tuyère de sortie 59 du réacteur.

Un tel agencement qui est avantageusement appliqué au cas d'un réacteur avec une tuyère dite tuyère longue n'est cependant pas imposé et dans d'autres configurations de l'invention, non illustrées, l'extrémité arrière du réacteur arrière 51 ou l'extrémité arrière de la nacelle dudit réacteur arrière est placé sensiblement au niveau de l'extrémité arrière 25 du fuselage, voire en avant de ladite extrémité arrière.

L'ensemble propulsif 50 comporte également une nacelle arrière 53 qui enveloppe le réacteur arrière 51 pour la partie dudit réacteur arrière qui n'est pas enterrée, visible en particulier sur les figures 3a à 3c.

La nacelle arrière 53 assure, de manière similaire à une nacelle annulaire conventionnelle, la qualité des écoulements aérodynamiques, traversant le réacteur, en aval et en amont du réacteur proprement dit, en particulier au niveau de l'entrée d'air et de la tuyère, et la qualité des écoulements externes autour de ladite nacelle arrière.

Les formes de la nacelle arrière 53, qui est de largeur inférieure à la largeur du fuselage dans la zone de ladite nacelle, se raccordent à la surface supérieure de la partie arrière 23 du fuselage pour assurer la continuité aérodynamique des dites surfaces qui s'étendent latéralement de chaque côté de la nacelle.

La géométrie de telle formes de raccordement est en pratique élaborée par des méthodes numériques et ou des méthodes expérimentales afin minimiser la traînée aérodynamique de l'avion, objectif général des concepteurs d'avion, mais également dans le cas présent pour garantir un écoulement aérodynamique sain sur parties du fuselage arrière 23 situées de chaque coté de la nacelle arrière 53 dans les différentes configurations de vol de l'avion et les différents régimes de fonctionnement du réacteur arrière 51.

L'extrémité arrière 25 forme un bord de fuite, sensiblement rectiligne et de largeur. **L**, de la partie arrière 23 du fuselage résultat de la convergence de la surface supérieure sensiblement plane dans une partie arrière, hors la nacelle 53, de la partie arrière 23 du fuselage et de la surface inférieure également sensiblement plane de ladite partie arrière proche de l'extrémité arrière du fuselage.

Une gouverne aérodynamique 6a, 6b, dite gouverne de fuselage, visible en particulier sur les figures 3a à 3d, est agencée dans cette partie arrière du fuselage 2 de chaque coté de la nacelle arrière 53 au niveau du bord de fuite à l'extrémité arrière 25.

Chaque gouverne de fuselage 6a, 6b, est articulée dans sa partie avant autour d'un axe sensiblement horizontal de sorte à permettre un contrôle de l'avion autour d'un axe de tangage parallèle à la direction Y.

L'empennage vertical 4 comporte deux dérives 41a, 41b, sensiblement verticales fixées au fuselage, une de chaque côté de la partie arrière 23, située prés de l'extrémité arrière 25 mais en avant des gouvernes de fuselage 6a, 6b.

De préférence la position longitudinale des dérives 41a, 41b, est suffisamment avancée pour que d'une part les interférences entre les gouvernes de fuselage 6a, 6b, et les dérives 41a, 41b, soient évitées et que d'autre part les dérives 41a, 41b, se trouvent hors des zones de projection éventuelle de débris de moteur.

De manière connue les dérives sont pourvues de gouvernes de bord de fuite pour assurer le contrôle de l'avion autour de l'axe Z dit axe de lacet.

Chaque dérive 41a, 41b, comporte une dérive supérieure 411a, 411b, d'extension verticale vers le haut et de préférence, comme sur l'exemple de l'avion des illustrations, comporte une dérive inférieure 412a, 412b, d'extension verticale vers le bas, limitée pour ne pas introduire de contrainte gênante sur une assiette maximale à cabrer de l'avion au sol.

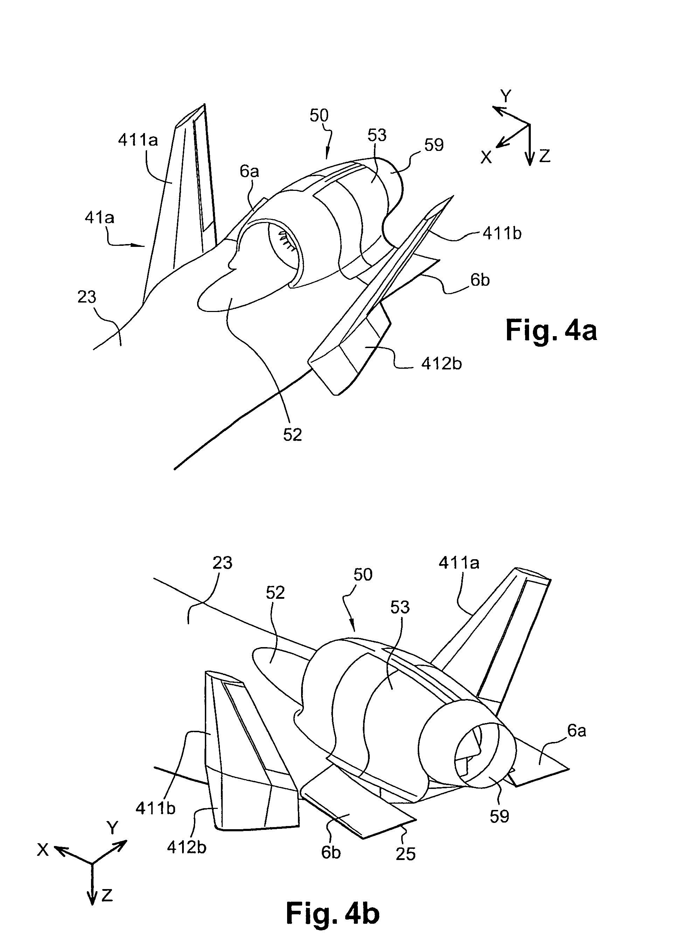

Ces caractéristiques de la partie arrière 23 du fuselage apparaissent plus clairement sur les détails des figures 4a et 4b présentés en vue perspective.

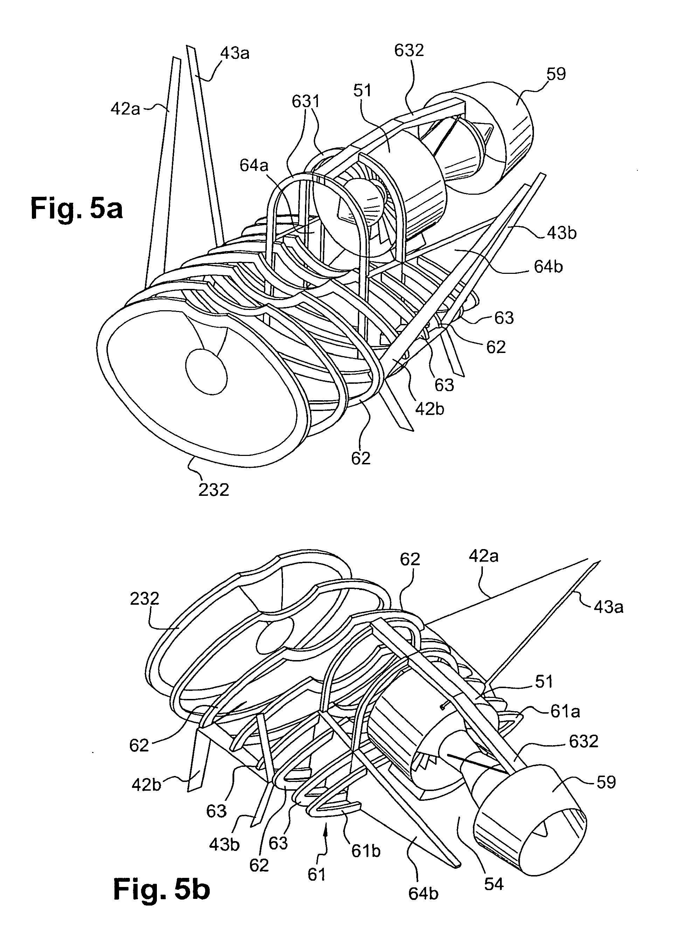

Les figures 5a et 5b présentent des vues écorchées de la partie arrière 23 du fuselage dans lesquelles les panneaux de revêtement du fuselage, des dérives 41a, 41b, et de la nacelle arrière 53 ne sont pas représentés de sorte que seuls des éléments internes principaux de la structure sont représentés.

Plus précisément, seule une partie en arrière d'un fond arrière 232 est représentée.

Le fond arrière 232 correspond par exemple à une limite arrière d'extension d'une cabine pressurisée dans le fuselage. Comme l'illustrent les figures 5a et 5b par la forme du fond étanche arrière 232 dont la hauteur maximale est sensiblement réduite par rapport à la largeur maximale, ledit fond arrière est situé en arrière de la section de raccordement 231, dans la partie évolutive arrière 23 du fuselage.

Cette position reculée du fond étanche arrière 232 est possible précisément en raison de la forme de la partie arrière 23 du fuselage de l'avion de l'invention et de la position de l'ensemble propulsif arrière 50 en arrière dudit fond étanche arrière, c'est à dire qu'une extrémité avant du réacteur arrière 51 est situé en arrière du fond arrière étanche 232, ce qui permet de conserver une largeur d'un plancher de cabine sensiblement constante avec une hauteur de cabine utilisable dans une position plus arrière que dans le cas d'un fuselage ayant un cône arrière conventionnel tout en garantissant que les volumes de la cabine pressurisée en avant du fond arrière étanche 232 se trouvent hors des zones d'éclatement du réacteur arrière dans lesquelles des débris de moteur peuvent être projetés.

Dans le cas illustré, la forme du fond étanche arrière 232 comporte également une échancrure supérieure correspondant à la forme locale du canal amont d'entrée d'air 52 qui dans ce cet exemple s'étend jusqu'en avant dudit fond arrière.

En arrière du fond arrière 232, entre ledit fond arrière et un cadre arrière 61, la partie arrière 23 du fuselage comporte des cadres intermédiaires assurant la forme du fuselage dont des cadres forts 62, 63.

En fonction de leurs positions dans la partie arrière 23 du fuselage, les cadres forts 62, 63 de ladite partie arrière assurent des fonctions particulières.

Sur le cadre arrière 61, cadre de fuselage le plus arrière, sont articulées les gouvernes de fuselage 6a, 6b, non représentées sur les figures 5a et 5b.

Une famille de cadres forts 62, dits cadres de dérives, est utilisée pour reprendre les efforts des dérives 41a, 41b de l'empennage vertical. Les cadres forts 62 correspondant sont principalement des cadres au niveau des longerons avants 42a, 42b et arrières 43a, 43b des dérives.

Une famille de cadres forts 63, dits cadres de moteur, au moins au nombre de deux et situés en avant du réacteur arrière 50, est utilisée pour maintenir ledit réacteur arrière.

Chaque cadre moteur 63 comporte un arceau 631 faisant saillie au-dessus dudit cadre.

Une poutre 632 est solidaire des arceaux 631 dans leurs parties supérieures et s'étend en porte à faux vers l'arrière sur une distance correspondant sensiblement à la partie la plus arrière de la nacelle arrière 53.

La poutre 632 se trouve ainsi au-dessus du réacteur 51 qui est fixé suspendu sous ladite poutre, avantageusement par une méthode conventionnelle au moyen d'attaches de type CORE au niveau du générateur de gaz du réacteur et ou d'attaches de type FAN au niveau du carter de la soufflante du réacteur.

Les formes et les dimensions des arceaux 631 assurent également le dégagement de l'entrée d'air en amont du réacteur arrière 51 en contournant la veine de l'entrée d'air du réacteur.

En raison du niveau de sécurité élevé attendu d'un dispositif de fixation d'un réacteur, la poutre 632 et les cadres moteurs 63 sont réalisés suivant une conception structurale dite « fail safe », chaque élément structural étant réalisé en deux parties juxtaposées pour palier à la défaillance d'une des dites deux parties.

Le cas échéant un cadre fort peut servir à la fois de cadre de dérive et de cadre moteur.

Le cadre arrière 61 est en pratique formé de deux demi-cadres arrières 61a, 61b de sorte qu'un volume 54 ou puits de maintenance sous le réacteur 51, correspondant au volume balayé par le réacteur 51 dans un mouvement vertical de descente en dessous de la poutre 632, le soit pas traversé par ledit cadre arrière.

Les demi-cadres arrières 61a, 61b sont solidaires de faces extérieures de nervures longitudinales 64a, respectivement 64b, et les dites nervures déterminent entre des faces intérieures des dites nervures le puits de maintenance 54 par lequel le réacteur arrière 51 peut être descendu ou monté lors d'opérations de dépose ou de montage.

Les nervures longitudinales 64a, 64b sont maintenues solidaires de cadres forts 62, 63 et se poursuivent vers l'arrière en porte à faux en arrière d'un cadre fort arrière, correspondant au plus arrière des cadres forts, de sorte à transmettre les efforts des demi-cadres arrières 61a, 61b sur lesquels s'articulent les gouvernes de fuselage 6a, 6b.

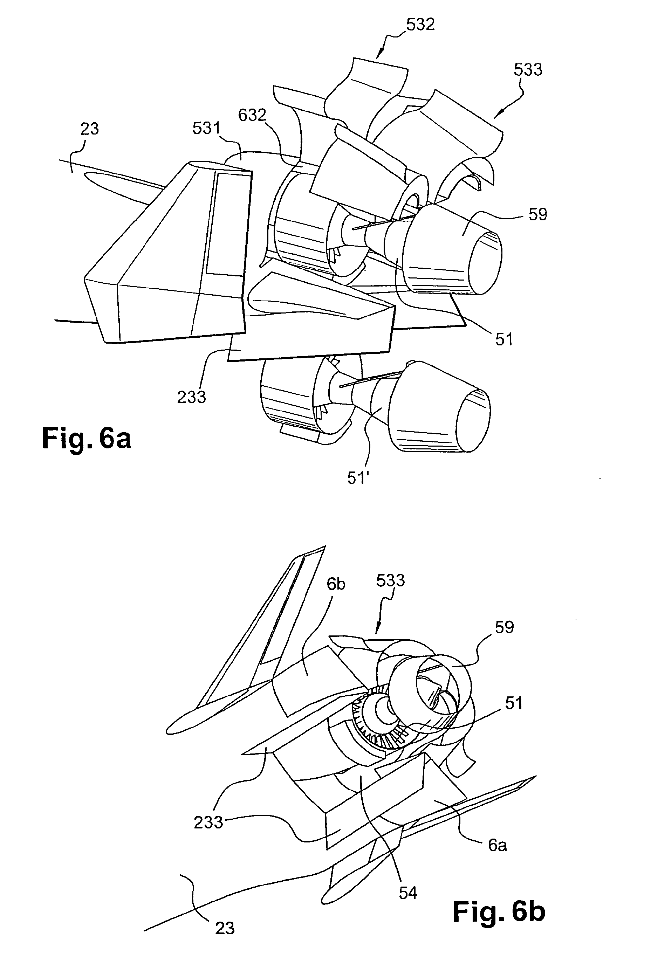

Comme illustré sur la figure 6a, la nacelle 53 comporte, au moins en arrière d'une structure d'entrée d'air 531 et d'une structure de tuyère de sortie réacteur 534, des capots mobiles 532, 533.

Les capots mobiles 532, 533 sont de préférence articulés au niveau de la poutre 632 de sorte à pouvoir être relevés lors d'opérations d'entretien.

Sur la surface inférieure du fuselage arrière 23, entre les nervures longitudinales 64a, 64b, des trappes mobiles 233, par exemple articulées au niveau des dites nervures longitudinales ferment, dans une première position dite fermée, figure 3d, le puits de maintenance 54 et assurent la continuité aérodynamique du fuselage et, dans une seconde position dite ouverte, figure 6b, libère le puits de maintenance permettant le passage du moteur entre les positions 51 et 51' du moteur illustrées sur la figure 6a ou permettre un accès par en dessous de parties inférieures du moteur, en particulier pour des opérations ne pouvant pas être réalisée sans cet accès.

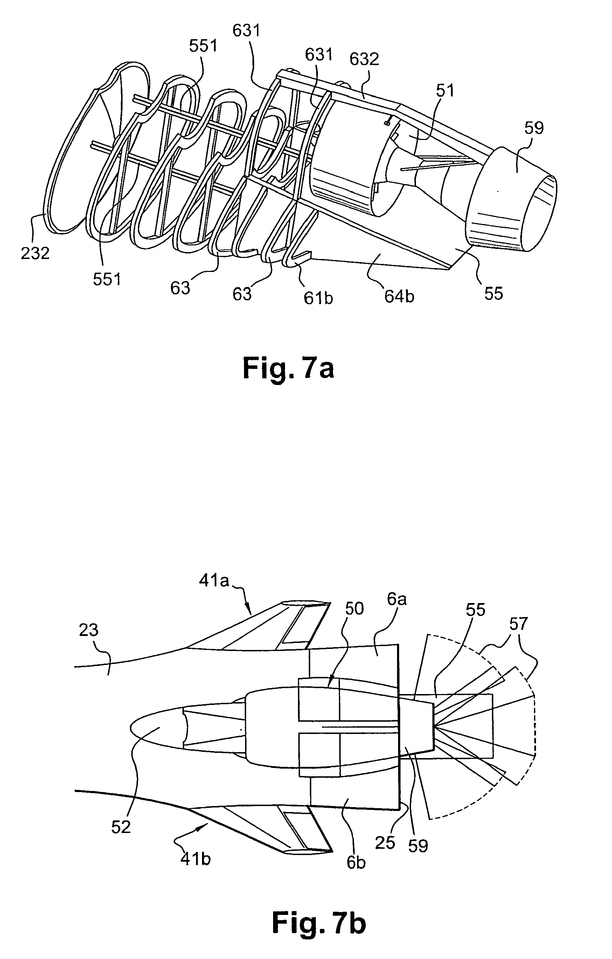

Dans une forme de réalisation, comme illustré sur les figures 7a et 7b, une structure rétractable 55 est agencée mobile dans la partie arrière du fuselage 23.

La structure rétractable 55 est de largeur sensiblement égale à la distance séparant les nervures longitudinales 64a, 64b, c'est à dire la largeur du puits de maintenance 54 et peut prendre au moins deux positions.

Dans une première position, dite rentrée, figure 7a, la structure rétractable 55 est située à l'intérieur du fuselage et dans une seconde position, dite sortie, la dite structure rétractable s'étend en arrière de l'extrémité arrière du fuselage, plus précisément sensiblement horizontalement et sous le réacteur arrière 51 comme illustré sur la figure 7b en vue de dessus.

La structure rétractable 55 est par exemple guidée par des rails de guidage latéraux 551.

Dans la position illustrée sur la figure 7a, la structure rétractable 55 est située sous le réacteur arrière 51, au niveau du puits maintenance 54, dans une première position rentrée qui permet le cas échéant à un opérateur assurant une tâche de maintenance sur le moteur de travailler avec une sécurité améliorée en particulier lorsque les trappes mobiles 233 sont ouvertes.

Avantageusement la dite structure rétractable comporte également au moins une seconde position rentrée dans laquelle le puits de maintenance reste dégagé pour les opérations de montage et de dépose du réacteur arrière 51 et pour des accès sur des parties inférieures du réacteur. Une telle seconde position rentrée est obtenue lorsque la structure rétractable 55 est dans une position avancée dans un espace compris entre le puits de maintenance 54 et le fond étanche arrière 232, position avancée qui est rendue accessible par le prolongement des rails de guidage latéraux 551 en direction dudit fond étanche arrière comme illustré sur la figure 7a

Les bénéfices de l'agencement d'avion proposé sont nombreux vis à vis de l'agencement d'un moteur arrière dans l'axe du fuselage.

La combinaison d'un fuselage à empennage en queue-de-morue et d'un moteur arrière permet de réaliser un avion avec une partie arrière de fuselage non pressurisé de longueur limitée et un réacteur restant accessible et facilement démontable pour des opérations de maintenance.

Le moteur partiellement enterré permet de réaliser des structures plus compactes donc plus légères et de diminuer la surface mouillée de la nacelle et donc la traînée aérodynamique.

Le bruit émis par le réacteur arrière 51 est masqué dans la partie avant du coté de l'entrée d'air par le fuselage en raison de la forme aplatie du dessus du fuselage dans la zone de l'entrée d'air et par le fait que le réacteur est partiellement enterré dans le fuselage et le bruits émis, matérialisé par des directions de diffusion 57 sur la figure 7b, dans la partie arrière du coté de la tuyère du réacteur est masqué par la structure rétractable 55 mobile vers l'arrière lorsque celle-ci est placée en position sortie lorsque l'avion est proche du sol.

Ainsi l'avion de l'invention s'avère moins bruyant pour une poussée totale donnée qu'un avion conventionnel.

Dans un mode de réalisation de l'avion de l'invention, le réacteur arrière est du même modèle que les autres réacteurs de l'avion monté sous voilure pour procurer une communauté maximum du système propulsif.

Dans un autre mode de réalisation préféré l'ensemble propulsif arrière comporte un réacteur de poussée supérieure à celle des réacteurs sous l'aile de l'avion ce qui améliore l'avion suivant l'invention sur le plan acoustique en diminuant la poussée nécessaire des moteurs sous l'aile, moteurs ne bénéficiant pas du masque acoustique du fuselage et permet en outre par des dimensions réduites possible des réacteurs sous l'aile de diminuer la hauteur des trains d'atterrissage de l'avion et donc leurs masses.

Dans une variante non décrite, l'ensemble propulsif arrière comporte deux réacteurs agencés cote à cote, les dimensions du fuselage, en particulier la largeur, et les cadres moteurs étant alors adaptés à cette configuration.

## Revendications

1. Avion (1) comportant un fuselage (2), comportant au moins une aile (3) fixée au fuselage entre une extrémité avant et une extrémité arrière (25) du dit fuselage, le fuselage (2) comportant une partie centrale (21) sensiblement cylindrique et une partie évolutive arrière (23) se raccordant à ladite partie centrale au niveau d'une section de raccordement (231), sur laquelle est fixé un empennage vertical (4) et sur laquelle est fixé un ensemble propulsif arrière (50) sensiblement au niveau d'un plan de symétrie vertical XZ du fuselage (2),
ou dans la partie évolutive arrière (23):
- une hauteur maximale de chaque section du fuselage est décroissante vers l'arrière de telle sorte que l'extrémité arrière (25) du fuselage forme un bord de fuite d'extrémité arrière (25) du fuselage de largeur L ;
- le réacteur arrière (51) du système propulsif arrière (50) est situé dans la partie arrière du fuselage (23) de sorte qu'une partie inférieure du réacteur arrière (51) au niveau d'un diamètre maximum dudit réacteur arrière est partiellement à l'intérieur du fuselage et une partie supérieure dudit réacteur arrière est au-dessus du fuselage suivant une configuration dite semi-enterrée ;
- le système propulsif arrière (50) comporte une nacelle (53) dont des formes se raccordent à la partie arrière (23) du fuselage de chaque côté de ladite nacelle, **caractérisé en ce que**, dans la partie évolutive arrière (23) : une largeur maximale de chaque section de fuselage augmente continûment, ladite largeur maximale étant croissante vers l'arrière depuis une largeur maximale de la section de raccordement (231) jusqu'à la largeur L supérieure à ladite largeur maximale de la section de raccordement.

2. Avion suivant la revendication 1 dans lequel la partie arrière (23) du fuselage comporte de chaque côté de l'ensemble propulsif arrière (50) une gouverne de fuselage (6a, 6b) articulée sur le fuselage autour d'un axe sensiblement horizontal dans un repère avion et dont un bord de fuite correspond à l'extrémité (25) du fuselage.

3. Avion suivant la revendication 2 dans lequel l'empennage vertical (4) comporte deux dérives (41a, 41b) sensiblement verticales fixées à la partie arrière (23) du fuselage en avant des gouvernes de fuselage (6a, 6b), chaque dérive (41a, 41b) étant solidarisée au fuselage sur un bord, respectivement droit et gauche de l'avion, de ladite partie arrière du fuselage.

4. Avion suivant la revendication 3 dans lequel des longerons (42a, 42b, 43a, 43b) des dérives (41a, 41b) sont agencés suivant la direction longitudinale de l'avion sur la partie arrière du fuselage (23) par rapport au réacteur arrière (51) de sorte que les dits longerons se trouvent en dehors de zone de projection de débris du dit réacteur arrière.

5. Avion suivant la revendication 4 dans lequel une structure mobile (55) comporte au moins une position rentrée dans laquelle ladite structure mobile est située à l'intérieur de la partie arrière du fuselage (23) et comporte au moins une position sortie dans laquelle ladite structure mobile forme une extension vers l'arrière du bord de fuite du fuselage à son extrémité arrière (25), sensiblement dans un plan horizontal d'un repère avion et sous l'ensemble propulsif arrière (50).

6. Avion suivant l'une des revendications précédentes dans lequel une extrémité avant du réacteur arrière (51) est situé suivant la direction longitudinale de l'avion en arrière d'un fond arrière étanche (232) de cabine du fuselage.

7. Avion suivant la revendication 6 dans lequel la partie arrière du fuselage (23) comporte, en arrière du fond arrière (232) de cabine, des cadres forts (62, 63), les dits cadres forts comportant des cadres de dérives (62) agencés pour reprendre les efforts introduits dans le fuselage par les longerons de dérive (42a, 42b, 43a, 43b), les dits cadres forts comportant des cadres moteurs (63) lesquels cadres moteurs sont pourvus chacun dans leur partie supérieure d'un arceau (631) présentant une ouverture ayant sensiblement les dimensions de l'entrée d'air du réacteur arrière (51), lesquels cadres moteurs sont agencés en avant du réacteur arrière (51), lesquels cadres moteurs sont de résistance structurale suffisante pour reprendre les efforts introduits dans la structure du fuselage par le réacteur arrière (51).

8. Avion suivant la revendication 7 dans lequel le réacteur arrière (51) est accroché suspendu sous une poutre structurale (632) en porte à faux en arrière des cadres moteurs (63), ladite poutre structurale étant solidaire des arceaux (631).

9. Avion suivant la revendication 8 dans lequel la partie arrière du fuselage (23) comporte deux nervures longitudinales (64a, 64b), sensiblement dans un plan vertical dans un repère avion, solidaire d'au moins un cadre fort (62, 63) et s'étendant en porte à faux en arrière d'un cadre fort arrière vers l'arrière sensiblement jusqu'à l'extrémité arrière (25) du fuselage, les dites nervures délimitant entre elles sous le réacteur arrière (51) un puits de maintenance (54) dégagé de tout obstacle par lequel ledit réacteur arrière peut être déposé par gravité,

10. Avion suivant la revendication 9 dans lequel un cadre arrière comporte deux portions externes (61a, 61b) solidaires des nervures longitudinales (64a, 64b) du côté opposé au puits de maintenance (54) sur lequel cadre arrière sont articulés les gouvernes de fuselage (6a, 6b).

## Claims

1. Aircraft (1) comprising a fuselage (2) comprising at least one wing (3) attached to the fuselage between a front end and a rear end (25) of the said fuselage, the fuselage (2) comprising a central portion (21) that is substantially cylindrical and a rear tapered portion (23) being connected to the said central portion at a connection section (231), to which a vertical tail unit (4) is attached and to which a rear propulsion assembly (50) is attached substantially at a vertical plane of symmetry XZ of the fuselage (2), where, in the rear tapered portion (23):
- a maximum height of each section of the fuselage decreases towards the rear such that the rear end (25) of the fuselage forms a rear end trailing edge (25) of the fuselage with a width L;
- the rear jet engine (51) of the rear propulsion system (50) is situated in the rear portion (23) of the fuselage so that a lower portion of the rear jet engine (51) at a maximum diameter of the said rear jet engine is partially inside the fuselage and an upper portion of the said rear jet engine is above the fuselage according to a configuration called semi-buried;
- the rear propulsion system (50) comprises a nacelle (53) of which shapes are connected to the rear portion (23) of the fuselage on each side of the said nacelle, **characterized in that**, in the rear tapered portion (23):
- a maximum width of each section of fuselage increases continuously, the said maximum width increasing towards the rear from a maximum width of the connection section (231) up to the width L greater than the said maximum width of the connection section.

2. Aircraft according to Claim 1, in which the rear portion (23) of the fuselage comprises on each side of the rear propulsion assembly (50) a fuselage control surface (6a, 6b) that is articulated on the fuselage about an axis that is substantially horizontal in an aircraft reference frame and of which a trailing edge corresponds to the end (25) of the fuselage.

3. Aircraft according to Claim 2, in which the vertical tail unit (4) comprises two substantially vertical fins (41a, 41b) attached to the rear portion (23) of the fuselage in front of the fuselage control surfaces (6a, 6b), each fin (41a, 41b) being secured to the fuselage on one edge, respectively right and left of the aircraft, of the said rear portion of the fuselage.

4. Aircraft according to Claim 3, in which side members (42a, 42b, 43a, 43b) of the fins (41a, 41b) are arranged in the longitudinal direction of the aircraft on the rear portion (23) of the fuselage relative to the rear jet engine (51) such that the said side members are outside the debris-projection zone of the said rear jet engine.

5. Aircraft according to Claim 4, in which a movable structure (55) comprises at least one recessed position in which the said movable structure is situated inside the rear portion (23) of the fuselage and comprises at least one protruding position in which the said movable structure forms a rearward extension of the trailing edge of the fuselage at its rear end (25), substantially in a horizontal plane of an aircraft reference frame and under the rear propulsion assembly (50).

6. Aircraft according to one of the preceding claims, in which a front end of the rear jet engine (51) is situated in the longitudinal direction of the aircraft behind a sealed rear cabin back (232) of the fuselage.

7. Aircraft according to Claim 6, in which the rear portion (23) of the fuselage comprises, behind the rear cabin back (232), strong frames (62, 63), the said strong frames comprising frames of fins (62) arranged so as to absorb the forces introduced into the fuselage by the fin side members (42a, 42b, 43a, 43b), the said strong frames comprising engine frames (63) which engine frames are each provided in their upper portion with a half-ring (631) having an opening having substantially the dimensions of the air intake of the rear jet engine (51), which engine frames are arranged in front of the rear jet engine (51), which engine frames are of sufficient structural strength to absorb the forces introduced into the structure of the fuselage by the rear jet engine (51).

8. Aircraft according to Claim 7, in which the rear jet engine (51) is coupled in suspension beneath a structural beam (632) cantilevered behind the engine frames (63), the said structural beam being secured to the half-rings (631).

9. Aircraft according to Claim 8, in which the rear portion of the fuselage (23) comprises two longitudinal ribs (64a, 64b), substantially in a vertical plane in an aircraft reference frame, secured to at least one strong frame (62, 63) and extending in a cantilevered manner behind a rear strong frame rearwards substantially up to the rear end (25) of the fuselage, the said ribs delimiting between them beneath the rear jet engine (51) a maintenance chamber (54) cleared of any obstacle through which the said rear jet engine can be lowered by gravity.

10. Aircraft according to Claim 9, in which a rear frame comprises two outer portions (61a, 61b) secured to the longitudinal ribs (64a, 64b) on the side opposite to the maintenance chamber (54) on which rear frame are articulated the fuselage control surfaces (6a, 6b).

## Patentansprüche

1. Flugzeug (1) mit einem Rumpf (2), mit mindestens einem Flügel (3), der am Rumpf zwischen einem vorderen Ende und einem hinteren Ende (25) des Rumpfs befestigt ist, wobei der Rumpf (2) einen im Wesentlichen zylindrischen zentralen Bereich (21) und einen hinteren sich ausweitenden Teil (23) aufweist, der an den zentralen Teil im Bereich eines Anschlussabschnitts (231) anschließt, an dem ein senkrechtes Leitwerk (4) befestigt ist und an dem eine hintere Antriebseinheit (50) im Wesentlichen im Bereich einer senkrechten Symmetrieebene XZ des Rumpfs (2) befestigt ist, wobei im hinteren sich ausweitenden Teil (23):
- eine maximale Höhe jedes Abschnitts des Rumpfs nach hinten abnimmt, derart, dass das hintere Ende (25) des Rumpfs eine Hinterkante des hinteren Endes (25) des Rumpfs mit einer Breite L formt;
- das hintere Triebwerk (51) des hinteren Antriebssystems (50) sich im hinteren Teil des Rumpfs (23) befindet, derart, dass ein unterer Teil des hinteren Triebwerks (51) im Bereich eines maximalen Durchmessers des hinteren Triebwerks sich teilweise im Inneren des Rumpfs befindet und ein oberer Teil des hinteren Triebwerks sich über dem Rumpf gemäß einer so genannten halb versenkten Konfiguration befindet;
- das hintere Antriebssystem (50) eine Gondel (53) aufweist, deren Formen an den hinteren Teil (23) des Rumpfs auf jeder Seite der Gondel anschließen,
**dadurch gekennzeichnet, dass** im hinteren sich ausweitenden Teil (23) eine maximale Breite jedes Rumpfabschnitts sich kontinuierlich vergrößert,
wobei die maximale Breite nach hinten von einer maximalen Breite des Anschlussabschnitts (231) bis zur Breite L größer als die maximale Breite des Anschlussabschnitts zunimmt.

2. Flugzeug nach Anspruch 1, bei dem der hintere Teil (23) des Rumpfs auf jeder Seite der hinteren Antriebseinheit (50) ein Rumpf-Ruder (6a, 6b) aufweist, das an den Rumpf um eine in einem Flugzeug-Bezugssystem im Wesentlichen waagrechte Achse angelenkt ist und von dem eine Hinterkante dem Ende (25) des Rumpfs entspricht.

3. Flugzeug nach Anspruch 2, bei dem das senkrechte Leitwerk (4) zwei im Wesentlichen senkrechte Seitenleitwerke (41a, 41b) aufweist, die am hinteren Teil (23) des Rumpfs vor den Rumpf-Rudern (6a, 6b) befestigt sind, wobei jedes Seitenleitwerk (41a, 41b) an einem rechten bzw. linken Rand des Flugzeugs fest mit dem hinteren Teil des Rumpfs verbunden ist.

4. Flugzeug nach Anspruch 3, bei dem Holme (42a, 42b, 43a, 43b) der Seitenleitwerke (41a, 41b) in Längsrichtung des Flugzeugs auf dem hinteren Teil des Rumpfs (23) bezüglich des hinteren Triebwerks (51) angeordnet sind, so dass die Holme sich außerhalb einer Zone des Herausschleuderns von Trümmern des hinteren Triebwerks befinden.

5. Flugzeug nach Anspruch 4, bei dem eine bewegliche Struktur (55) mindestens eine eingezogene Stellung, in der die bewegliche Struktur sich im Inneren des hinteren Teils des Rumpfs (23) befindet, und mindestens eine ausgetretene Stellung aufweist, in der die bewegliche Struktur eine Verlängerung der Hinterkante des Rumpfs an ihrem hinteren Ende (25) nach hinten im Wesentlichen in einer waagrechten Ebene eines Flugzeug-Bezugssystems und unter der hinteren Antriebseinheit (50) bildet.

6. Flugzeug nach einem der vorhergehenden Ansprüche, bei dem ein vorderes Ende des hinteren Triebwerks (51) sich in der Längsrichtung des Flugzeugs hinter einem dichten hinteren Kabinenboden (232) des Rumpfs befindet.

7. Flugzeug nach Anspruch 6, bei dem der hintere Teil des Rumpfs (23) hinter dem hinteren Kabinenboden (232) Hauptspante (62, 63) aufweist, wobei die Hauptspante Seitenleitwerkspante (62) aufweisen, die ausgebildet sind, um die in den Rumpf durch die Seitenleitwerkholme (42a, 42b, 43a, 43b) eingeführten Kräfte aufzunehmen, wobei die Hauptspante Motorspante (63) aufweisen, wobei die Motorspante je in ihrem oberen Bereich mit einem Bügel (631) versehen sind, der eine Öffnung aufweist, die im Wesentlichen die Abmessungen des Lufteinlasses des hinteren Triebwerks (51) hat, wobei die Motorspante vor dem hinteren Triebwerk (51) angeordnet sind, wobei die Motorspante einen ausreichenden strukturellen Widerstand haben, um die durch das hinter Triebwerk (51) in die Struktur des Rumpfs eingeführten Kräfte aufzunehmen.

8. Flugzeug nach Anspruch 7, bei dem das hintere Triebwerk (51) unter einem Strukturbalken (632) freitragend hinter den Motorspanten (63) aufgehängt befestigt ist, wobei der Strukturbalken fest mit den Bügeln (631) verbunden ist.

9. Flugzeug nach Anspruch 8, bei dem der hintere Bereich des Rumpfs (23) zwei Längsrippen (64a, 64b) im Wesentlichen in einer Längsebene in einem Flugzeug-Bezugssystem aufweist, die fest mit mindestens einem Hauptspant (62, 63) verbunden sind und sich freitragend hinter einem hinteren Hauptspant nach hinten im Wesentlichen bis zum hinteren Ende (25) des Rumpfs erstrecken, wobei die Rippen zwischen sich unter dem hinteren Triebwerk (51) einen von jedem Hindernis freien Wartungsschacht (54) begrenzen, durch den das hintere Triebwerk durch Schwerkraft abgesetzt werden kann.

10. Flugzeug nach Anspruch 9, bei dem ein hinterer Spant zwei Außenteile (61a, 61b) aufweist, die auf der dem Wartungsschacht (54) entgegengesetzten Seite fest mit den Längsrippen (64a, 64b) verbunden sind, an welchem hinteren Spant die Rumpf-Ruder (6a, 6b) angelenkt sind.
